# DEMANDE DE BREVET EUROPEEN

(11) **EP 0 832 698 A1**
(43) Date de publication de la demande: **01.04.1998**
(21) Numéro de dépôt: 97402255.0
(22) Date de dépôt: 29.09.1997
(51) Int. Cl.: B08B 15/02

(54) **Appareil pour retirer l'amiante**

(30) Priorité: 30.09.1996 FR 9611864
(71) Demandeur: Guibert, Gaetan, 95850 Bezons (FR)
(72) Inventeur: Guibert, Gaetan, 95850 Bezons (FR)

(57) **Abrégé**

La présente invention concerne un appareil destiné pour retirer l'amiante, appliqué sur les parties à protéger contre l'incendie, elle se compose d'une coupole (1) ayant un disque (2) tournant à l'intérieur, relié à un moteur (35) par un axe flexible (36), l'évacuation des déchets est obtenue par un aspirateur (38), les poussières sont réduite à l'intérieur par une arrivée (15) d'eau pulvérisée, la coupole (1) est prévue pour être manuelle ou montée sur un bras (32) pour le travail au plafond, pour en faciliter la manipulation l'ensemble est monté sur un chariot.

Il existe un materiél identique pour l'utilisation manuelle afin de traiter à l'intérieur de caisson ou gaine.

## Description

La présente invention a pour objet de retirer l'amiante appliquée dans la construction et autre pour la protection contre l'incendie

L'amiante est un silicate hydrate de magnésium et de calcium contenant une petite quantité de fer ,

Amiante en grec amiantus(signifie inccoruptible)l'extraction de l'amiante est obtenue par calcination de la roche où on l'extrait de carriere ,l'amiante est composée de fibres tres fines et flexibles courtes ou longues suivant la varieté, difficilement fusible ce qui lui à valu de nombreux emplois ,les ancients en faisaient du linge qu'ils placaient au feu pour le néttoyer;aujourduis on l'utilise sous différentes formes ,tresses,présses étoupes joints etc...depuis de nombreuses années on l'applique dans le batiment,et encore sur les constructions métalliques pour la prottection contre le feu,l'amiante est appliquées sur la surface à protéger par une progection sous préssion sur une épaisseur d'environt I5mm sur toutes les parties apparentes,murs,plafonds, et à l'intérieur des gaines et caissons,la protection contre la chaleur étant de I à 2 heures maxi,ce délais étant suffisant pour l'arrivée des services de sécurité,sur un temps donné la température peut atteindre l'ordre de I000 degrés,malgrès les qualités reconnue à l'amiante ,il existe un défaut majeur c'est sa diffusion naturelle de propagation dans l'air ambiant de micro fibres cette caractéristique à été démintrée par le corps médicale pour être néfaste à la santé, les fibres viennent se fixer par innhalation sur la plébe et apres une vingtaine d'année provoque une maladie ,l'asbestose,forme de cancer incurable,ce qui a amener les pays industriels à interdire l'utilisation de l'amiante sous toutes ses formes,

Dans l'état actuel de la technique il semble qu'il n'existe aucun materiel industriel conçue pour le désamiantage sur le marché,autre que le grattoir à main,cette téchnique est fatiguant et peu rentable économiquement; car il faut compter un métre carré par heure de travail ; Le matériel objet de l'invention est destiné à remédier à ce probléme de rentabilité et surtout du confort de travail celui-ci se présente sous forme d'une coupole(I) avec un rebord (I7) ayant à l'interieur un disque(2) tournant à une vitesse déterminée ,sur la coupole ( I ) est fixée une prise d'aspirateur (I4 ) pour éliminer les déchets d'amiante arrachée de la surface à traiter ,une arrivée d'eau (I5 )avec un gicleur (I6)pulvérisant l'eau pour réduire les poussieres,il est de même fixé deux poignées (20)pour manoeuvrer l'ensemble sur les surfaces verticales, il est prévu un systéme d'accrochage ( 2I )pour maintenir en suspention par un cable (30) avec un contre poids (3I),monté sur un bras mobile (32)FIG I, lors de désamiantage au plafond, la coupole sera fixée sur le bras mobile par l'intermédiaire d'une partie male (29) type de celle utilisée pour les voitures ,tractant une remorque,la boule (28 )est fixée sur un étrier (27),il prévu un systéme de bloquage pour éviter que la coupole tourne sous l'action du disque,

Le disque ( 2 ) est maintenu sur la coupole (I) par l'ensemble (4 )et(5),la piece (5) est déstinée à maintenir le disque(2) et permettant à l'axe (3) d'entrainer le disque d'une part et d' autre part d'obtenir un écart entre le (2) et la coupole,ceci permettant une plus grande facilité pour l'évacuation des déchets d'amiante,l'axe(3) est bloqué au disque et relié au moteur(35) par un flixible(I5), la butée (6) est solidaire de l'axe(3) ce qui évite à celui-ci tout déplacement longitudinale ,l'écrou (7) est déstiné à régler le jeu de l'axe avec la butée (6),les rondelles fendues servant à bloquer l'ensemble ,par l'intermédiaire de l'écrou (7 bis)

Le disque (2) est conçue d'une couronne exterieur relié au disque interieur (BIS) par des rayons (I0) avec une remontée(I2), donnant une rigidité à l'ensemble d'une part et d'autre part permet la fixation des brosses (II) ammovibles,les poils (I3) devant avoir une souplesse déterminée

Le vide(9) entre les rayons ,permet l'évacuation des déchets obtenus par l'action de désamiantage ,et sont aspirés directement vers le bac de réception ,

Lors de l'action de désamiamtage, l'ensemble de la coupole est appliqué sur la partie à traiter et pour éviter une trop grande dispertion de fibre d'amiante dans l'air ambiant,la coupole doit venir adherer au mieux sur la partie en cours de traitement , cette action est obtenue par l'effet de dépréssion due à l'aspiration d'une part et d'autre part par la réalisation de la coupole,celle-ci possede une couronne inteieur (17) fixée sur la partie (1),la deuxieme couronne(23) mobile, celle-ci étant conçue pour créer l'étancheité de l'ensemble, le maintient de cette couronne extérieure sur l'ensemble est obtenue d'une part ,une glissiere (25) fixée sur la partie (17) et d'autre part venant manoeuvré dans la lumiere (24 ) créer sur la couronne (23),un ressort (26) permettant le maintient en position haute,

Lors de l'action de désamiantage nous devont éffectué une préssion sur la coupole,afin de la maintenir appliquée sur la à traiter,pour éviter toutes déformation du disque (2),il sera placé des roulements à billes(19) ou galets de roulement sur la couronne (17) ou sur la partie (1)

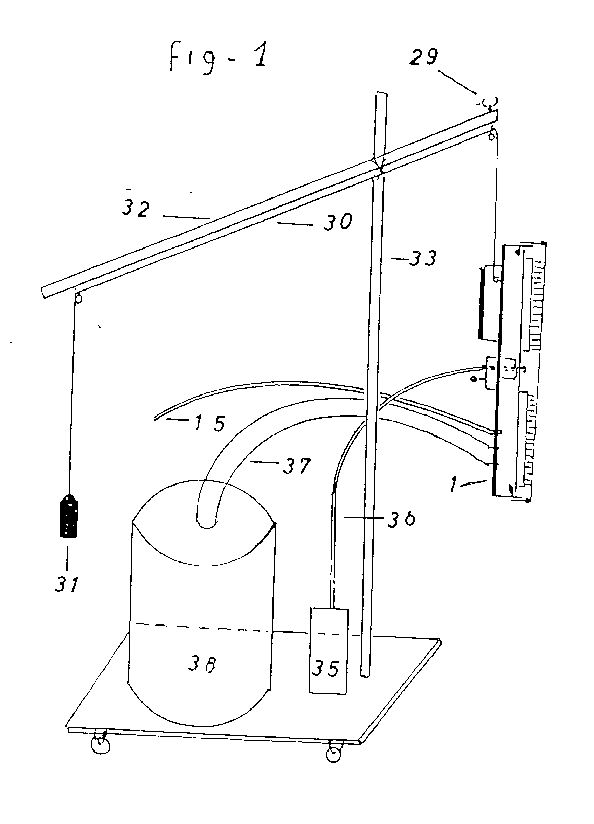

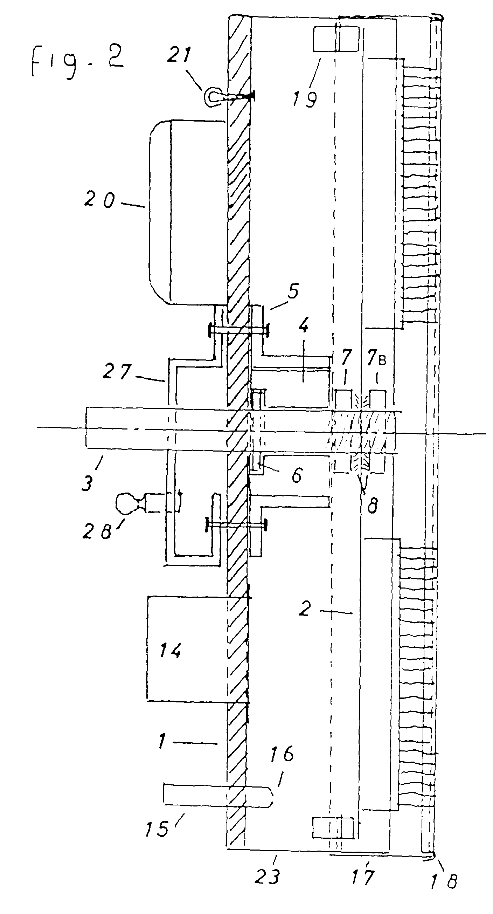

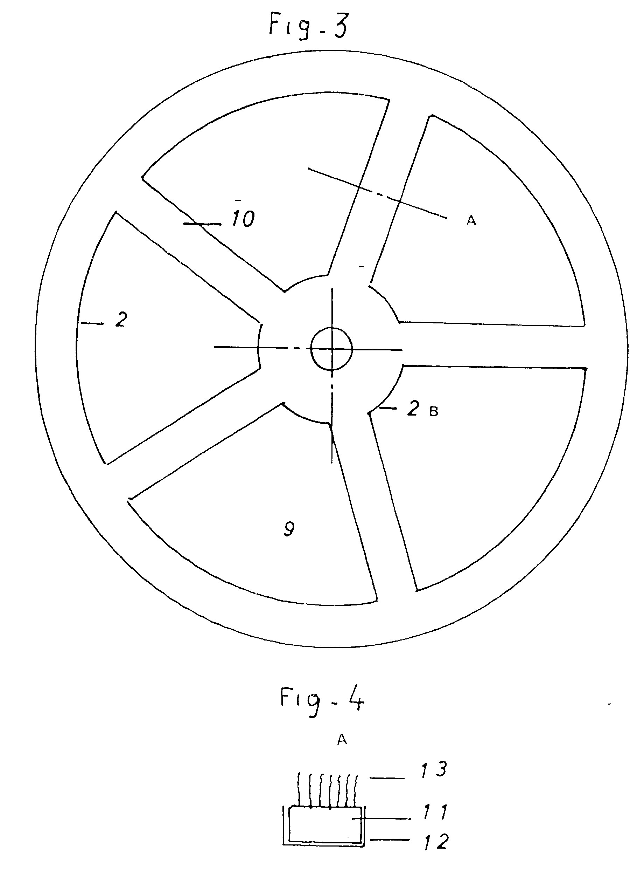

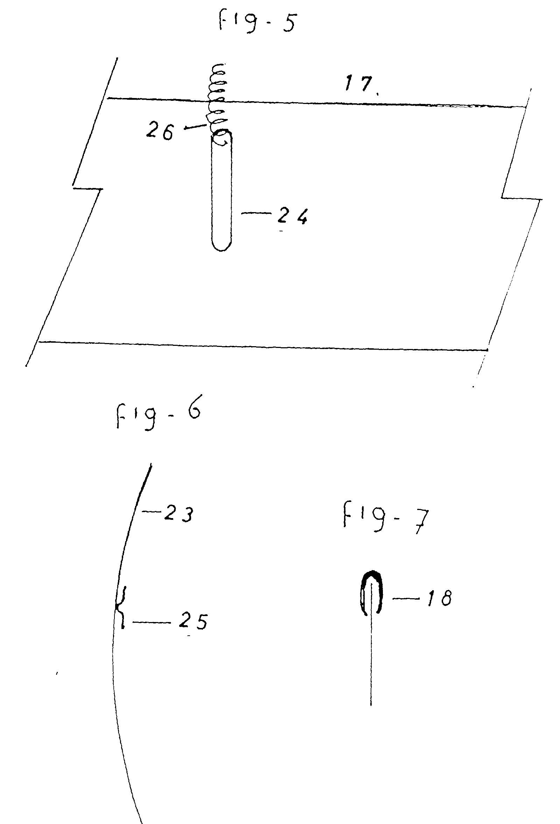

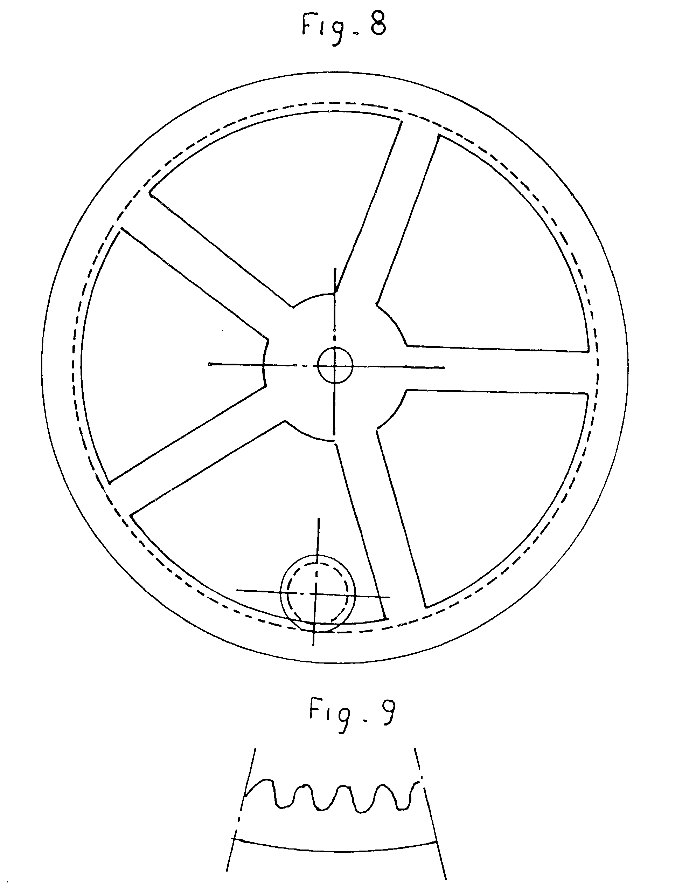

Une autre hypothése peut-etre utilisée pour obtenir l'entrainement du disque (2) par un engrenage placé sur l'exterieur du disque (fig 8)

La coupole sera réalisée dans la matiere la plus appropriée à son utilisation,en métal,plastique rigide,ou obtenue par formage,moulage,ou emboutissage,il est bien entendue que d'autre technique peuvent intervenir,

L'ensemble sera monté sur un chariot,afin d'obtenir une plus grande maniabilité,

L'aspirateur est bien entendu conforme aux normes de sécurité et d'hygiene actuellement en cours pour le travail de l'amiante,

Pour la réalisation des travaux dans des caissons ou à l'interiéur de gaines,il sera utilisé un matériel léger et adapter à ce type de travaux basé sur la même technique appliquée pour la coupole,en utilisant une brosse ronde,ou éventuellemnt une brosse boisseau,un grattoir peut-etre équipé d'un récupérateur d'amiante monté sur l'aspirateur ,

Présentation des planches ci jointes
La figure (1)montre l'ensemble du charriot dans la configuration de travail,avec la coupole (1) de désiamantage relié au moteur par l'intermédiaire du flexible(15),ainsi que la prise avec l'aspirateur(38),la coupole est presentée dans la configuration de désamiantage sur mur verticale fixée sur son bras(32)maintenu par l'intermédiaire du cable(30) et du contre poids(31),
La figure (2) montre la coupole telle que présentée dans le descriptif
La figure (3 montre le disque support des brosses métalliques
La figure (4) montre un rayon du disque en coupe perméttant le maintient des brosses inter-changeable,
La figure (5) montre la lumiere pratquée dans le rebord(17) avec le ressord de rappele,(26)
La figure(6) montre sur la couronne la glissiere (24)venant s'encastrer dans la lumiere (24),
La figure (7) montre le jiont (18) de protection fisée sur la couronne(23)
La figure (8) montre le disque(2)entrainné par le bord exterieur du disque
la figure (9) montre la denture de l'éngrenage,

## Revendications

1. La coupole de dés amiantage est conçue pour une utilisation manuelle d'une part et d'autre part,par l'intermédiaire d'un bras fixé sur un support,monté sur un charriot de travail,la coupole(1) de forme ronde avec une couronne permettant une relative étanchéité,sur la coupole sont fixées deux poignées (20) un crochet(21),et d'une boule(28) fixée sur un étier,ainsi que la prise d'aspirateur (14) et d'une arrivée d'eau pulvérisée à l'interieur de la coupole tourne un dique(2) formé de rayons (10) celui-ci est entrainé en son centre par un axe(3)relié au moteur par flexible(36,le vide créer entre les rayons permet l'évacuation des déchets,le disque (2)est maintenu à la coupole par l'intermediaire d'une piece(4)et(5) d'une part ,et d'autre part permettant la rotation du disque,et pour éviter toutes déformation du disque des roulements à biles(19) sont placer dessous sur le rebord ou sur la coupole

2. coupole selon la revendication 1 caractérisée en ce qu'il comprend un ensemble (4) et(5) perméttant la rotation du disque (2) mobile d'une part et d'autre part la fixation sur la coupole

3. coupole selon la revendication (1)et(2) caractérisée en ce qu'elle comprend une prise d'aspirateur(14) intégrée pour éviter la dispertion dans l'air des fibres d'amiante et facilité le travail de récupéreration

4. coupole selon la revendication de (1)à(3)caractérisée en ce qu'elle comprend une arrivée d'eau pulvérisée(16) por éviter la dispertion dans l'air des fibres d'amiante,

5. Coupole selon la revendication de (1)à(4) caractérisée en ce qu'elle comprend,pour facilité le travail manuel un annean (21) pour y fixé un cable(30) ayant un contre poids(31) le tout maintenu par un bras(32),deux poignées(20) permettent l'application sur la surface à traiter,

6. Coupole selon la revendication de (1)à(5) caractérisée en ce qu'elle comprend une boule(28) permettant les travaux aux plafond,fixé sur un étruer(27),et bloquée par la pince(29),

7. disque selon la revendication de(1) caractérisée en ce qu' il comprend un disque (2)exterieur reliée à un disque interieur (2bis) par des rayons(10)

8. Disque selon la revendication (1)et (7) caractérisée en ce comprend des rayons (10) avec un rebord(12)formant un U,cette disposition permet une rigidité,et, d'autre part facilite la fixation des brosses,

9. Coupole selon les revendications (1)à(8) et caractérisée en ce qu'il comprend fixé sur la coupole (I) des roulements à billes (19),ou des galets de roulement,ceci afin de soutenir le disque et évite toute déformation lors du désamiantage,les roulements seront fixes sur la coupole,(1)
